# EUROPEAN PATENT SPECIFICATION

(11) **EP 3 387 350 B1**
(45) Date of publication and mention of the grant of the patent: **19.06.2024**
(21) Application number: 16873602.3
(22) Date of filing: 29.11.2016
(51) Int. Cl.: F25D 23/06, F16L 59/06, F16L 59/04, B29C 70/74, B29C 70/58, B29K 509/08, B29L 31/00

(54) **VACUUM INSULATION STRUCTURES WITH A FILLER INSULATOR**
VAKUUMISOLIERUNGSSTRUKTUREN MIT EINEM FÜLLSTOFFISOLATOR
STRUCTURES D'ISOLATION SOUS VIDE AVEC UNE CHARGE ISOLANTE

(30) Priority: 08.12.2015 US 201514962822
(43) Date of publication of application: 17.10.2018
(73) Proprietor: Whirlpool Management EMEA S.r.l., 20156 Milano (MI) (IT)
(72) Inventor: DEKA, Lakshya, Benton Harbor Michigan 49022 (US); NAIK, Abhay, Benton Harbor Michigan 49022 (US)
(74) Representative: Gallarotti, Franco
(86) International application number: PCT/US2016/063958
(87) International publication number: WO 2017/100034

(56) References cited:
- EP-A1- 1 916 465
- EP-A1- 2 851 351
- EP-A2- 2 650 627
- WO-A1-02/060576
- WO-A2-2009/013106
- CN-A- 104 816 478
- DE-A1-102007 034 298
- DE-A1-102011 051 178
- FR-A1- 2 991 698
- RU-C2- 2 349 618
- US-A- 5 090 981
- US-A- 5 171 346
- US-A1- 2013 257 257
- US-B1- 6 212 852

## Description

### TECHNICAL FIELD

The invention relates to methods of forming a refrigerator cabinet. Further, the invention relates to a refrigerator cabinet.

### BACKGROUND

The efficiency of a refrigerator may, at least in part, rely on the refrigerator's ability to keep items within the refrigerator cool and prevent heat from entering the refrigerator.

EP2650627 A2 discloses a method of forming a refrigerator cabinet, wherein an internal and external liner are provided and positioned such as to define a gap there between, and wherein an insulator is injected into the gap. EP2650627 A2 discloses furthermore a refrigerator cabinet according to the preamble of claim 7.

Accordingly, new methods and materials of insulating a refrigerator are sought.

### BRIEF SUMMARY OF THE DISCLOSURE

According to claim 1, a method of forming a refrigerator cabinet is presented that includes the steps of providing an inner liner; providing an external wrapper, the wrapper defining at least one injection port and at least one vacuum port; positioning the inner liner within the external wrapper such that a gap is defined between the inner liner and the external wrapper; drawing a vacuum within the gap through the at least one vacuum port; and injecting a plurality of glass spheres into the gap through the at least one injection port. The step of drawing the vacuum through the at least one vacuum port and injecting the insulator into the gap through the at least one injection port are performed simultaneously. The insulator is injected using a powder pump.

According to claim 4, a method of forming a refrigerator cabinet is presented that includes the steps of providing an inner liner; providing an external wrapper, the wrapper defining at least one vacuum port and a back aperture; positioning the inner liner within the external wrapper such that a gap is defined between the inner liner and the external wrapper; dispensing a plurality of insulating spheres into the gap through the back aperture; positioning a back plate over the back aperture; sealing the back plate to the external wrapper to form an airtight, or hermetic, seal; and drawing a vacuum within the gap.

According to claim 7, a refrigerator cabinet is provided that includes an inner liner and an external wrapper. The inner liner is positioned within the external wrapper such that a gap is defined between the external wrapper and inner liner. A plurality of insulating spheres is positioned within the gap. A pressure within the gap is below 1000 Pa. The external wrapper defines a back aperture. A back plate is positioned over the back aperture and is sealed to the external wrapper to form an airtight, or hermetic, seal.

These and other features, advantages, and objects of the present disclosure will be further understood and appreciated by those skilled in the art by reference to the following specification, claims, and appended drawings.

### BRIEF DESCRIPTION OF THE DRAWINGS

The foregoing summary, as well as the following detailed description of the disclosure, will be better understood when read in conjunction with the appended drawings. For the purpose of illustrating the disclosure, there are shown in the drawings, certain embodiment(s). It should be understood, however, that the disclosure is not limited to the precise arrangements and instrumentalities shown, the scope of the invention being defined by the appended claims. Drawings are not necessarily to scale. Certain features of the disclosure may be exaggerated in scale or shown in schematic form in the interest of clarity and conciseness.
FIG. 1A is a top perspective view of a refrigerator cabinet, according to one embodiment;
FIG. 1B is an exploded top perspective view of the refrigerator cabinet of FIG. 1A, according to one embodiment;
FIG. 2 is a cross-sectional view taken at line II-II of FIG. 1A;
FIG. 3A is a schematic depiction of a refrigerator cabinet insulator filling system, according to one embodiment;
FIG. 3B is a flow chart of a refrigerator cabinet insulator filling method, according to one embodiment;
FIG. 4A is a schematic depiction of a refrigerator cabinet insulator filling system, according to one embodiment; and
FIG. 4B is a flow chart of a refrigerator cabinet insulator filling method, according to one embodiment.

### DETAILED DESCRIPTION

As required, detailed embodiments of the present disclosure are disclosed herein. However, it is to be understood that the disclosed embodiments are merely exemplary of the disclosure that may be embodied in various and alternative forms. The figures are not necessarily to a detailed design and some schematics may be exaggerated or minimized to show function overview. Therefore, specific structural and functional details disclosed herein are not to be interpreted as limiting, but merely as a representative basis for teaching one skilled in the art to variously employ the present disclosure.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

It is to be understood that the present disclosure is not limited to the particular embodiments described below, as variations of the particular embodiments may be made and still fall within the scope of the appended claims. It is also to be understood that the terminology employed is for the purpose of describing particular embodiments, and is not intended to be limiting. Instead, the scope of the present disclosure will be established by the appended claims.

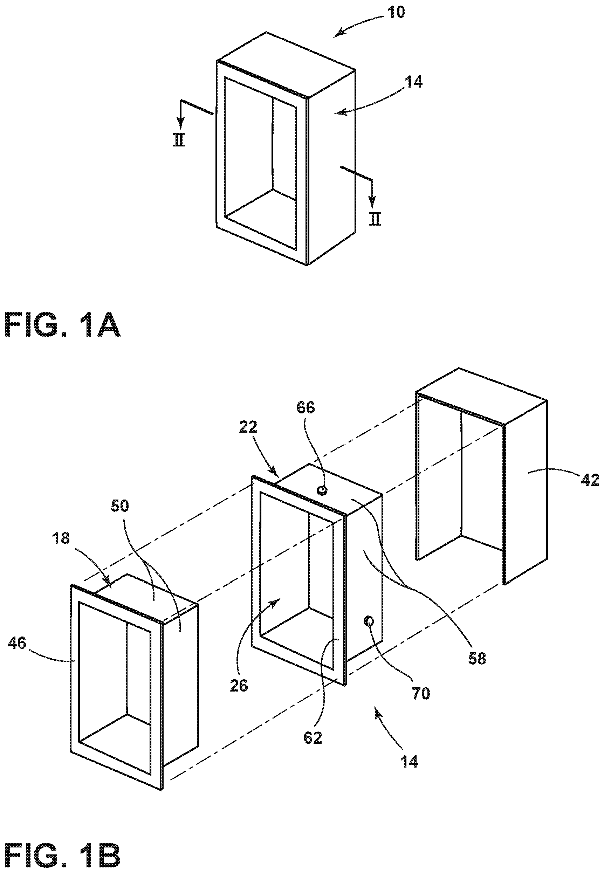

For purposes of description herein, the terms "upper," "lower," "right," "left," "rear," "front," "vertical," "horizontal," and derivatives thereof shall relate to the disclosure as oriented in FIG. 1A, unless stated otherwise. However, it is to be understood that the disclosure may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

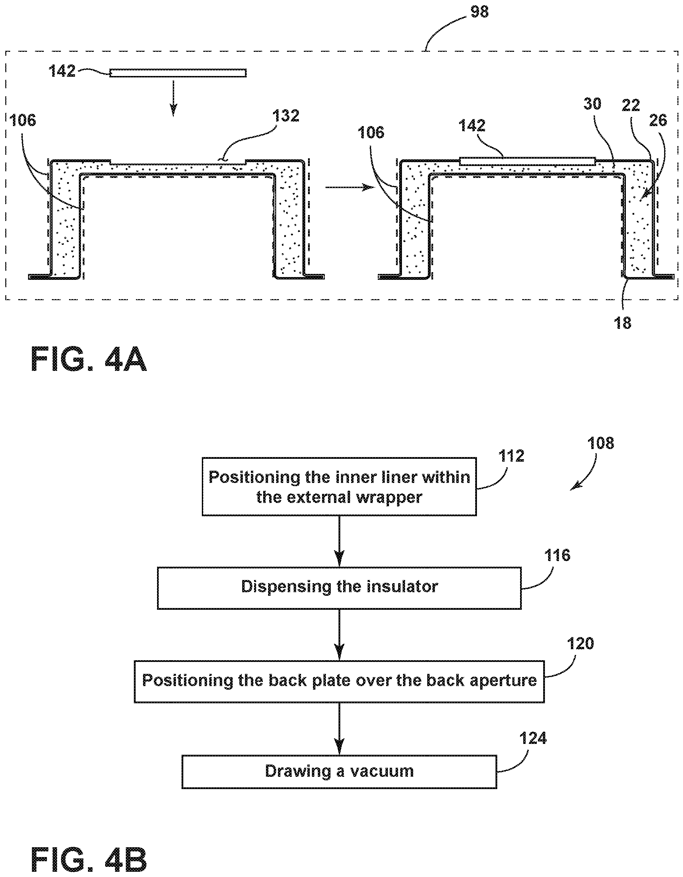

Referring to FIGS. 1A-4B, a refrigerator 10 includes a cabinet 14 having an inner liner 18 and an external wrapper 22. The inner liner 18 is positioned within the external wrapper 22 such that a gap 26 is defined between the external wrapper 22 and internal liner 18. An insulator 30 is positioned within the gap 26. A pressure within the gap 26 may be below about 1000 Pa.

Referring now to FIGS. 1A and 1B, the refrigerator 10 includes the cabinet 14. The refrigerator 10 may take a variety of configurations including French door, side-by-side, top freezer, bottom freezer, counter depth, compact, built-in, and other types of refrigerators. The cabinet 14 includes the inner liner 18, the external wrapper 22 and may optionally include a shell 42. In the depicted embodiment, the inner liner 18 has a generally rectangular box shape, but may take a variety of shapes including a cube, prism, parallelepiped, etc. and combinations thereof. The inner liner 18 may have a liner flange 46 disposed around the inner liner 18 and connected to a plurality of liner walls 50 which define the inner liner 18. The inner liner 18 may be formed from a polymeric material having high barrier properties (e.g., low gas permeation), metals and combinations thereof. The inner liner 18 may be formed via thermoforming, injection molding, bending and/or forming. The liner walls 50 of the inner liner 18 may have a thickness ranging from between about 0.1 mm to about 2.0 mm. In a specific embodiment, the liner walls 50 have a thickness of about 0.5 mm.

The inner liner 18 is shaped and configured to mate, couple or otherwise be positioned within the external wrapper 22. The external wrapper 22 includes a plurality of wrapper walls 58 to which a wrapper flange 62 is coupled. The wrapper flange 62 and the liner flange 46 are configured to be coupled when the cabinet 14 is in an assembled configuration. The coupling of the liner flange 46 and the wrapper flange 62 may be performed such that an airtight, or hermetic, seal is formed between the inner liner 18 and the external wrapper 22. The hermetic seal of the wrapper flange 62 and the liner flange 46 may be achieved through use of adhesives, welding, and elastomeric gasket fitting under compression and/or crimping.

The external wrapper 22 may be formed of and by any of the materials and processes listed above in connection with the inner liner 18. The wrapper walls 58 of the external wrapper 22 may have a thickness ranging from between about 0.1 mm to about 1.0 mm. In a specific embodiment, the wrapper walls 58 have a thickness of about 0.5 mm. The wrapper walls 58 of the external wrapper 22 may define an injection port 66 and/or a vacuum port 70. The external wrapper 22 may include one or multiple injection ports 66 and/or vacuum ports 70. The injection ports 66 and/or vacuum ports 70 may be positioned as illustrated or in a variety of positions about the external wrapper 22. It will be understood that in alternative embodiments, the injection ports 66 and/or vacuum ports 70 may be disposed on both the external wrapper 22 and inner liner 18, or solely on the inner liner 18. The injection port 66 and the vacuum port 70 may be used to access (e.g., to inject an insulator, draw a vacuum and/or perform maintenance within) the gap 26 once the inner liner 18 and the external wrapper 22 are bonded. The injection port 66 and the vacuum port 70 may have a diameter of between about 10 mm and about 50 mm, or between about 12.5 mm and about 25 mm. In various embodiments, the injection port 66 and the vacuum port 70 may have different diameters than one another. Similarly, in embodiments utilizing more than one injection port 66 and vacuum port 70, the sizes of the injection ports 66 and the vacuum ports 70 may vary.

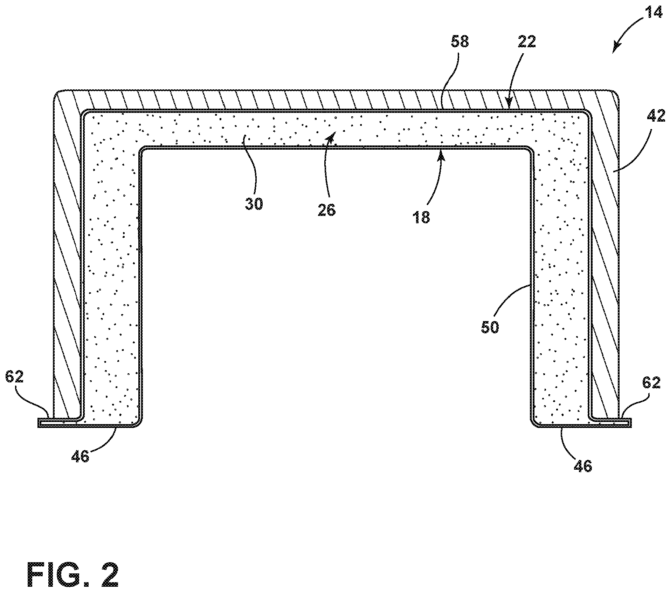

Referring now to FIG. 2, once the inner liner 18 and the external wrapper 22 have been joined and the gap 26 defined, the insulator 30 may be dispensed into the gap 26. The gap 26 may have a thickness of between about 12 mm to about 30 mm. The gap 26 may have an air pressure of less than about 1 atm (101,325 Pa), less than about 0.5 atm (50,662.5 Pa), less than about 0.1 atm (10,132.5 Pa), less than about 0.001 atm (101.325 Pa) or less than about 0.00001 atm (1.01 Pa). The insulator 30 may be a material configured to have low thermal conductivity. According to the invention, the insulator comprises organic or inorganic spheres. For example, the insulator 30 may include precipitated silica, polyurethane foam, fumed silica, beads (e.g., of glass, ceramic, and/or an insulative polymer), hollow organic micro/nano spheres, hollow inorganic micro/nano spheres, silica aerogel, nano aerogel powder, perlite, glass fibers, polyisocyanurate, urea foam, rice hulls, rice husk ash, diatomaceous earth, cenospheres, polyethylene foam, vermiculite, fiberglass and combinations thereof. Optionally, an opacifier (e.g., TiO₂, SiC and/or carbon black) may be included in the insulator 30 or materials configured to change the radiation conduction, the flow properties and packing factor of the insulator 30. Further, one or more gas (e.g., oxygen, hydrogen, carbon dioxide) and/or moisture getters may be included in the insulator 30.

In embodiments where the insulator 30 includes organic spheres, the organic spheres may include polystyrene, polythiophenes, polyethylene, rubber and/or combinations thereof. In embodiments where the insulator 30 includes inorganic spheres, the spheres may include glasses, ceramics and combinations thereof. In embodiments where the insulator 30 includes beads or spheres, the beads or spheres may have an average outer diameter ranging from about 50 nm to about 300 µ, or from about 1 µ to about 300 µ, or from about 50 nm to about 1000 nm. In various embodiments, the diameter size distribution of the spheres is low. Sphere embodiments of the insulator 30 may be filled with a single gas (e.g., H₂, O₂, N₂, noble gases, volatile organic compounds, CO₂, SO, SO₂) or a mixture of gases (e.g., atmosphere, noble gases,

O₂, SO₂, SO). The spheres may be sealed and have a gas pressure within the spheres of between about 0.1 atm and about 1.0 atm, or between about 0.2 atm and about 0.5 atm, or between about 0.25 atm and about 0.35 atm. 1 atm corresponds to 101 325 Pa. The insulator 30 is positioned within the gap 26 and in contact with both the wrapper walls 58 and the liner walls 50. The packing factor of the insulator 30 within the gap 26 may be greater than about 60%, greater than about 62%, greater than about 65%, or greater than about 70%.

The insulator 30 is configured not only to thermally insulate the inner liner 18 from the external wrapper 22, but also to resist the inward directed force of the atmosphere on the lower than atmosphere pressure of the gap 26. Atmospheric pressure on the inner liner 18 and the external wrapper 22 may cause distortions which are unsightly and may lead to a rupture in either of the inner liner 18 or the external wrapper 22 thereby causing a loss of vacuum in the gap 26. Further, drawing the vacuum in the gap 26 may cause an impact or shock loading of the insulator 30 as the inner liner 18 and the external wrapper 22 contract around the insulator 30. Accordingly, the insulator 30 should have sufficient crush resistance to resist deformation of the inner liner 18 and the external wrapper 22 due to a pressure gradient between the atmosphere and an air pressure of the gap 26.

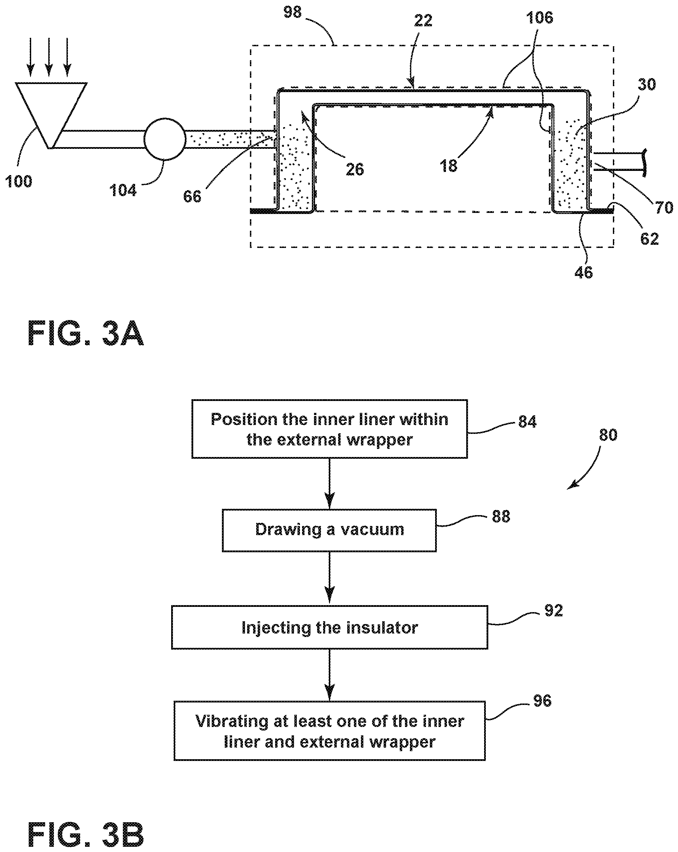

Referring now to FIGS. 3A and 3B, one embodiment of a first method 80 of inserting the insulator 30 within the gap 26 is depicted. The first method 80 includes step 84, step 88, step 92 and step 96. In step 84, the inner liner 18 is positioned within the external wrapper 22 as explained in greater detail above. The liner flange 46 and the wrapper flange 62 may be bonded so as to make the gap 26 airtight. Next, step 88 of drawing a vacuum may be performed. A vacuum, or negative pressure relative to atmospheric pressure, is generated within the gap 26. The vacuum is created by drawing the air out of the gap 26 through the at least one vacuum port 70. A pump or other suitable vacuum sources may be connected to the vacuum port 70 to facilitate drawing the vacuum. Additionally or alternatively, the first method 80, or any of its steps, may be performed within a vacuum chamber 98 to provide the vacuum to the gap 26.

Next, step 92 of injecting the insulator 30 into the gap 26 is performed using a powder pump. Injection of the insulator 30 into the gap 26 may be accomplished by feeding the insulator 30 into a hopper 100 which in turn supplies the insulator 30 to a powder pump 104. The powder pump 104 pumps or otherwise injects the insulator 30 into the gap 26 of the cabinet 14. The powder pump 104 may utilize fluidization of the insulator 30 to move the insulator 30 into the gap 26. The powder pump 104 may dispense the insulator 30 into the cabinet 14 with or without pressure. Use of the power pump 104 allows the insulator 30 to be inserted into the gap 26 without any densification or compaction, while also providing an easy and efficient means of inserting the insulator 30. Next, step 96 of vibrating at least one of the inner liner 18 and the external wrapper 22 is performed. Vibration of the inner liner 18 and/or the external wrapper 22 may cause the insulator 30 to increase its packing factor. During steps 84, 88, 92 and/or 96 the inner liner 18 and/or external wrapper 22 may be supported by one or more supports 106 such that relative motion between the inner liner 18 and the external wrapper 22 is minimized or prevented. The supports 106 may allow the thickness of the gap 26 to remain constant through filling and vibration. It will be understood that although method 80 was described in a specific order, the steps may be performed in any order or simultaneously.

Referring now to FIGS. 4A and 4B, depicted is a second method 108 of dispensing the insulator 30 within the gap 26 between the inner liner 18 and the external wrapper 22. The second method 108 includes step 112, step 116, step 120 and step 124. The second method 108 begins with step 112 of positioning the inner liner 18 within the external wrapper 22 and sealing the gap 26, as disclosed above. Next step 116 of dispensing the insulator 30 within the gap 26 is performed. In the second method 108, dispensing of the insulator 30 into the gap 26 may be accomplished through a back aperture 132. The back aperture 132 may take a variety of shapes (e.g., square, rectangular, circular, oblong, and combinations thereof) and sizes which are configured to allow the insulator 30 to be poured or otherwise dispensed into the gap 26. The insulator 30 may be dispensed into the gap 26 between the inner liner 18 and the external wrapper 22 via a powder pump 104, pouring the powder, or manual application. In embodiments of the cabinet 14 where the external wrapper 22 includes the back aperture 132, the external wrapper 22 may not include the injection port 66. Optionally, step 116 may be performed while at least one of the inner liner 18 and the external wrapper 22 are vibrated. Vibration of the inner liner 18 and/or the external wrapper 22 may facilitate in shaking or vibrating the insulator 30 into its maximum packing factor and facilitate a more complete filling of the gap 26.

Once the gap 26 between the inner liner 18 and the external wrapper 22 is filled with the insulator 30 and sufficiently packed, step 120 of positioning a back plate 142 over the back aperture 132 is performed. The back plate 142 may be constructed of the same or similar material as the external wrapper 22, or a different material. Once the back plate 142 is positioned over the back aperture 132, the back plate 142 is sealed to the external wrapper 22 to form an airtight, or hermetic, seal. After step 120 is completed, step 124 of drawing a vacuum within the gap 26 is performed. The vacuum may be drawn through the vacuum port 70 of the external wrapper 22. Additionally or alternatively, method 108, or individual steps thereof, may be performed within the vacuum chamber 98 such that drawing a vacuum may not be necessary, or less vacuum can be drawn. Further, the second method 108 may utilize the supports 106 to resist relative motion of the inner liner 18 and the external wrapper 22. It will be understood that steps of the first and second methods 80, 108 may be omitted, combined, mixed and matched, or otherwise reordered.

Use of the present disclosure may offer several advantages. For example, use of the present disclosure allows for the formation of vacuum insulated cabinets 14, panels, and structures without noticeable deformation of the inner liner 18 and the external wrapper 22. By filling the gap 26, deformation of the inner liner 18 and the external wrapper 22 from the pressure differential between the atmosphere and the gap 26 is resisted by the insulator 30. Vacuum insulated cabinets 14, panels and structures may provide enhanced insulative properties as compared to traditional foam filled insulating structures in addition to a reduced size (e.g., thickness decrease of greater than about 55%, 60% or 70%). Additionally, use of the disclosure may allow for the construction of a less dense cabinet 14 while also providing increased rigidity due to the use of the spheres. Further use of the spheres as insulation provides assembly benefits in that the spheres are easy to dispense, may more easily and fully fill the gap 26 than traditional foams and may be upwards of 100% recyclable. Even further, it will be understood that the present disclosure is not limited to cabinets for refrigerators, but may be used to form a variety of panels, structures and containers which have insulative properties. It will be understood that although the disclosure was described in terms of a refrigerator, the disclosure may equally be applied to coolers, ovens, dishwashers, laundry applications, water heaters, household insulation systems, ductwork, piping insulation, acoustical insulation and other thermal and acoustical insulation applications.

Use of spheres as the insulator 30 is not generally known in prior art in refrigeration products due to the propensity of glass spheres to fracture under impact loading. Impact loading may occur while dispensing within the gap 26 and/or generating a vacuum in the gap 26, during assembly, and during normal use/consumer mishandling of the refrigerator 10. Accordingly, it would not have been obvious to use spheres as the insulator 30 in vacuum insulated cabinets 14, panels and structures.

In this specification and the appended claims, the singular forms "a," "an" and "the" include plural reference unless the context clearly dictates otherwise.

For the purposes of describing and defining the present teachings, it is noted that the terms "substantially" and "approximately" are utilized herein to represent the inherent degree of uncertainty that may be attributed to any quantitative comparison, value, measurement, or other representation. The terms "substantially" and "approximately" are also utilized herein to represent the degree by which a quantitative representation may vary from a stated reference without resulting in a change in the basic function of the subject matter at issue.

## Claims

1. A method of forming a refrigerator cabinet (14), comprising the steps:
providing an inner liner (18);
providing an external wrapper (22), the wrapper (22) defining at least one injection port (66) and at least one vacuum port (70);
positioning the inner liner (18) within the external wrapper (22) such that a gap (26) is defined between the inner liner (18) and the external wrapper (22);
drawing a vacuum within the gap (26) through the at least one vacuum port (70); and
injecting an insulator (30) into the gap (26) through the at least one injection port (66), said insulator (30) comprising organic or inorganic spheres,
wherein the step of drawing the vacuum through the at least one vacuum port (70) and injecting the insulator (30) into the gap through the at least one injection port (66) are performed simultaneously and
wherein the insulator (30) is injected using a powder pump (104).

2. The method of claim 1, wherein the insulator (30) is fluidized during injection into the gap (26).

3. The method of claim 1 or claim 2, further comprising the step of:
sealing the at least one injection port (66); and
drawing a vacuum within the sphere-filled gap (26).

4. A method of forming a refrigerator cabinet (14), comprising the steps:
providing an inner liner (18);
providing an external wrapper (22), the wrapper (22) defining at least one vacuum port (70) and a back aperture (132);
positioning the inner liner (18) within the external wrapper (22) such that a gap (26) is defined between the inner liner (18) and the external wrapper (22);
dispensing an insulator (30) into the gap (26) through the back aperture (132), said insulator (30) comprising organic or inorganic spheres;
positioning a back plate (142) over the back aperture (132);
sealing the back plate (142) to the external wrapper (22) to form an airtight, or hermetic, seal and
drawing a vacuum within the gap (26).

5. The method of claim 4, wherein the insulator (30) is injected using a powder pump (104).

6. The method of claim 4 or 5, wherein the insulator (30) comprises glass, ceramic and combination thereof.

7. A refrigerator cabinet (14) comprising:
an inner liner (18);
an external wrapper (22), wherein the inner liner (18) is positioned within the external wrapper (22) such that a gap (26) is defined between the external wrapper (22) and inner liner (18); and
an insulator (30) positioned within the gap (26), **characterized in that**
a pressure within the gap (26) is below 1000 Pa, said insulator (30) comprising organic or inorganic spheres,
wherein the external wrapper (22) defines a back aperture (132) and
wherein a back plate (142) is positioned over the back aperture (132) and is sealed to the external wrapper (22) to form an airtight, or hermetic, seal.

## Patentansprüche

1. Verfahren zum Ausbilden eines Kühlschrankgehäuses (14), umfassend die folgenden Schritte:
Bereitstellen einer Innenauskleidung (18);
Bereitstellen einer externen Hülle (22), wobei die Hülle (22) mindestens eine Einspritzöffnung (66) und mindestens eine Vakuumöffnung (70) definiert;
Positionieren der Innenauskleidung (18) in der externen Hülle (22) derart, dass ein Spalt (26) zwischen der Innenauskleidung (18) und der externen Hülle (22) definiert wird;
Erzeugen eines Vakuums in dem Spalt (26) durch die mindestens eine Vakuumöffnung (70); und
Einspritzen eines Isolators (30) in den Spalt (26) durch die mindestens eine Einspritzöffnung (66), wobei der Isolator (30) organische oder anorganische Kugeln umfasst,
wobei die Schritte zum Erzeugen des Vakuums durch die mindestens eine Vakuumöffnung (70) und Einspritzen des Isolators (30) in den Spalt durch die mindestens eine Einspritzöffnung (66) gleichzeitig durchgeführt werden und
wobei der Isolator (30) unter Verwendung einer Pulverpumpe (104) eingespritzt wird.

2. Verfahren nach Anspruch 1, wobei der Isolator (30) während einer Einspritzung in den Spalt (26) fluidisiert wird.

3. Verfahren nach Anspruch 1 oder 2, ferner umfassend die folgenden Schritte:
Abdichten der mindestens einen Einspritzöffnung (66); und
Erzeugen eines Vakuums in dem mit Kugeln gefüllten Spalt (26).

4. Verfahren zum Ausbilden eines Kühlschrankgehäuses (14), umfassend die folgenden Schritte:
Bereitstellen einer Innenauskleidung (18);
Bereitstellen einer externen Hülle (22), wobei die Hülle (22) mindestens eine Vakuumöffnung (70) und einen rückseitigen Durchgang (132) definiert;
Positionieren der Innenauskleidung (18) in der externen Hülle (22) derart, dass ein Spalt (26) zwischen der Innenauskleidung (18) und der externen Hülle (22) definiert wird;
Abgeben eines Isolators (30) in den Spalt (26) durch den rückseitigen Durchgang (132), wobei der Isolator (30) organische oder anorganische Kugeln umfasst;
Positionieren einer rückseitigen Platte (142) über der rückseitigen Öffnung (132);
Abdichten der rückseitigen Platte (142) an der externen Hülle (22), um einen luftdichten oder hermetischen Dichtung auszubilden, und
Erzeugen eines Vakuums in dem Spalt (26).

5. Verfahren nach Anspruch 4, wobei der Isolator (30) unter Verwendung einer Pulverpumpe (104) eingespritzt wird.

6. Verfahren nach Anspruch 4 oder 5, wobei der Isolator (30) Glas, Keramik und Kombinationen daraus umfasst.

7. Kühlschrankgehäuse (14), umfassend:
eine Innenauskleidung (18);
eine externe Hülle (22), wobei die Innenauskleidung (18) in der externen Hülle (22) derart positioniert ist, dass ein Spalt (26) zwischen der externen Hülle (22) und der Innenauskleidung (18) definiert wird; und
einen Isolator (30), der in dem Spalt (26) positioniert ist, **dadurch gekennzeichnet, dass** ein Druck in dem Spalt (26) unter 1000 Pa liegt, wobei der Isolator (30) organische oder anorganische Kugeln umfasst,
wobei die externe Hülle (22) einen rückseitigen Durchgang (132) definiert, und
wobei eine rückseitige Platte (142) über dem rückseitigen Durchgang (132) positioniert ist und an der externen Hülle (22) abgedichtet ist, um eine luftdichte oder hermetische Dichtung auszubilden.

## Revendications

1. Procédé de formation d'une enceinte de réfrigérateur (14), comprenant les étapes suivantes :
la fourniture d'une garniture interne (18) ;
la fourniture d'une enveloppe externe (22), l'enveloppe (22) définissant au moins un orifice d'injection (66) et au moins un orifice de vide (70) ;
le positionnement de la garniture interne (18) à l'intérieur de l'enveloppe externe (22) de telle sorte qu'un espacement (26) est défini entre la garniture interne (18) et l'enveloppe externe (22) ;
l'aspiration d'un vide à l'intérieur de l'espacement (26) par l'intermédiaire de l'au moins un orifice de vide (70) ; et
l'injection d'un isolant (30) dans l'espacement (26) par l'intermédiaire de l'au moins un orifice d'injection (66), ledit isolant (30) comprenant des sphères organiques ou inorganiques,
dans lequel les étapes d'aspiration du vide par l'intermédiaire de l'au moins un orifice de vide (70) et d'injection de l'isolant (30) dans l'espacement par l'intermédiaire de l'au moins un orifice d'injection (66) sont mises en œuvre simultanément et
dans lequel l'isolant (30) est injecté à l'aide d'une pompe à poudre (104).

2. Procédé selon la revendication 1, dans lequel l'isolant (30) est fluidisé pendant l'injection dans l'espacement (26).

3. Procédé selon la revendication 1 ou 2, comprenant en outre les étapes suivantes :
le scellement de l'au moins un orifice d'injection (66) ; et
l'aspiration d'un vide à l'intérieur de l'espacement (26) rempli de sphères.

4. Procédé de formation d'une enceinte de réfrigérateur (14), comprenant les étapes suivantes :
la fourniture d'une garniture interne (18) ;
la fourniture d'une enveloppe externe (22), l'enveloppe (22) définissant au moins un orifice de vide (70) et une ouverture arrière (132) ;
le positionnement de la garniture interne (18) à l'intérieur de l'enveloppe externe (22) de telle sorte qu'un espacement (26) est défini entre la garniture interne (18) et l'enveloppe externe (22) ;
la distribution d'un isolant (30) dans l'espacement (26) par l'intermédiaire de l'ouverture arrière (132), ledit isolant (30) comprenant des sphères organiques ou inorganiques ;
le positionnement d'une plaque arrière (142) sur l'ouverture arrière (132) ;
le scellement de la plaque arrière (142) à l'enveloppe externe (22) pour former un joint étanche à l'air, ou hermétique, et
l'aspiration d'un vide à l'intérieur de l'espacement (26).

5. Procédé selon la revendication 4, dans lequel l'isolant (30) est injecté à l'aide d'une pompe à poudre (104).

6. Procédé selon la revendication 4 ou 5, dans lequel l'isolant (30) comprend du verre, des céramiques et des combinaisons de ceux-ci.

7. Enceinte de réfrigérateur (14) comprenant :
une garniture interne (18) ;
une enveloppe externe (22), dans lequel la garniture interne (18) est positionnée à l'intérieur de l'enveloppe externe (22) de telle sorte qu'un espacement (26) est défini entre l'enveloppe externe (22) et la garniture interne (18) ; et
un isolant (30) positionné à l'intérieur de l'espacement (26), **caractérisé en ce qu'**une pression à l'intérieur de l'espacement (26) est inférieure à 1 000 Pa, ledit isolant (30) comprenant des sphères organiques ou inorganiques,
dans lequel l'enveloppe externe (22) définit une ouverture arrière (132) et
dans lequel une plaque arrière (142) est positionnée sur l'ouverture arrière (132) et est scellée à l'enveloppe externe (22) pour former un joint étanche à l'air, ou hermétique.
